(19)

Europäisches
Patentamt
European
Patent Office
Office européen
des brevets

(11) **EP 3 288 152 A1**

(12) **EUROPEAN PATENT APPLICATION**
published in accordance with Art. 153(4) EPC

(43) Date of publication:
**28.02.2018 Bulletin 2018/09**

(21) Application number: **16783391.2**

(22) Date of filing: **20.04.2016**

(51) Int Cl.:
*H02J 50/00* (2016.01)     *H02J 7/02* (2016.01)

(86) International application number:
**PCT/KR2016/004094**

(87) International publication number:
**WO 2016/171458 (27.10.2016 Gazette 2016/43)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **21.04.2015 KR 20150055695**

(71) Applicant: **LG Innotek Co., Ltd.
Seoul, 04637 (KR)**

(72) Inventors:
• **PARK, Soo Young**
  **Seoul 04637 (KR)**
• **PARK, Su Bin**
  **Seoul 04637 (KR)**
• **LEE, Jong Heon**
  **Seoul 04637 (KR)**

(74) Representative: **DREISS Patentanwälte PartG
mbB
Friedrichstrasse 6
70174 Stuttgart (DE)**

(54) **NETWORK-BASED WIRELESS POWER CONTROL METHOD AND WIRELESS POWER
CONTROL APPARATUS AND SYSTEM**

(57)     The purpose of the present invention is to provide a network-based wireless power control method, and an apparatus and a system therefor. A wireless power control method in a serving wireless power transmission apparatus, according to a first embodiment of the present invention, comprises the steps of: when power is applied, activating the Bluetooth function; transmitting a beacon signal using a resonance frequency band; when an uplink Bluetooth signal generated by a wireless power reception apparatus is detected, measuring a first reception sensitivity for the Bluetooth signal; receiving second to n-th reception sensitivities corresponding to the Bluetooth signal from at least one other wireless power transmission apparatus connected via a network; and determining, on the basis of the first to n-th reception sensitivities, whether or not transmission of wireless power is possible. Accordingly, the present invention has an advantage of being capable of more effectively transmitting wireless power using a plurality of wireless power transmission apparatuses connected via a network.

FIG. 1

EP 3 288 152 A1

**Description**

[Technical Field]

Embodiments relate to a network-based wireless power transmission technology, and more particularly, to a network-based wireless power control method that enables seamless power transmission to a moving wireless power reception apparatus through cooperation between network-connected wireless power transmission apparatuses, and an apparatus and system therefor.

[Background Art]

Recently, as information and communication technology rapidly develops, a ubiquitous society based on information and communication technology is being formed.

In order for information communication devices to be connected anywhere and anytime, sensors equipped with a computer chip having a communication function should be installed in all facilities throughout society. Accordingly, power supply to these devices or sensors is becoming a new challenge. In addition, as the types of mobile devices such as Bluetooth handsets and iPods, as well as mobile phones, rapidly increase in number, charging the battery has required time and effort for users. As a way to address this issue, wireless power transmission technology has recently drawn attention.

Wireless power transmission (or wireless energy transfer) is a technology for wirelessly transmitting electric energy from a transmitter to a receiver using the induction principle of a magnetic field and the resonance effect. Back in the 1800s, an electric motor or a transformer based on electromagnetic induction began to be used. Thereafter, a method of transmitting electric energy by radiating electromagnetic waves such as radio waves or lasers was tried. The principle of electromagnetic induction also forms the basis of charging electric toothbrushes we often use and some wireless shavers.

Up to now, wireless energy transmission schemes may be broadly classified into electromagnetic induction, electromagnetic resonance, and power transmission using a short-wavelength radio frequency.

In the electromagnetic induction scheme, when two coils are arranged adjacent to each other and a current is applied to one of the coils, a magnetic flux generated at this time generates electromotive force in the other coil. This technology is being rapidly commercialized mainly for small devices such as mobile phones. In the electromagnetic induction scheme, power of up to several hundred kilowatts (kW) may be transmitted with high efficiency, but the maximum transmission distance is 1 cm or less. As a result, the device should be generally arranged adjacent to the charger or the floor.

The electromagnetic resonance scheme uses an electric field or a magnetic field instead of using an electromagnetic wave or current. The electromagnetic resonance scheme is advantageous in that the scheme is safe to other electronic devices or the human body since it is hardly influenced by the electromagnetic waves. However, this scheme may be used only over a limited distance and in a limited space, and has somewhat low energy transfer efficiency.

The short-wavelength wireless power transmission scheme (simply, RF scheme) takes advantage of the fact that energy can be transmitted and received directly in the form of radio waves. This technology is an RF power transmission scheme using a rectenna. A rectenna, which is a compound of "antenna" and "rectifier", refers to a device that converts RF power directly into direct current (DC) power. That is, the RF method is a technology for converting AC radio waves into DC waves. Recently, with improvement in efficiency, commercialization of RF technology has been actively researched.

Wireless power transmission technology can be applied to various industries such as the IT industry, the railroad industry, and the home appliance industry as well as personal portable devices such as smartphones.

However, the conventional wireless power transmission system only considers wireless power transmission to a stationary wireless power reception apparatus, and is not capable of performing seamless power transmission to a moving wireless power reception apparatus.

[Disclosure]

[Technical Problem]

It is an object of the present disclosure to provide a network-based wireless power control method and an apparatus and system therefor.

It is another object of the present disclosure to provide a network-based wireless power control method and system capable of seamlessly transmitting wireless power according to movement of a wireless power receiver.

It is another object of the present disclosure to provide a network-based wireless power control method and system capable of maximizing wireless power transmission efficiency in a wireless power transmission system in which a plurality of wireless power transmission apparatuses is connected to a network.

The technical objects that can be achieved through the embodiments are not limited to what has been particularly described hereinabove and other technical objects not described herein will be more clearly understood by persons skilled in the art from the following detailed description.

[Technical Solution]

Embodiments provide a network-based wireless power control method and an apparatus and system therefor.

In a first embodiment, a method for controlling wireless power by a serving wireless power transmission apparatus may include activating a Bluetooth function when power is applied, transmitting a beacon signal using a resonance frequency band, measuring, when an uplink Bluetooth signal generated by a wireless power reception apparatus is sensed, a first reception sensitivity to the Bluetooth signal, receiving second to n-th reception sensitivities corresponding to the Bluetooth signal from at least one other wireless power transmission apparatus connected to a network, and determining whether transmission of the wireless power is possible based on the first to n-th reception sensitivities.

Here, when it is determined that transmission of the wireless power is possible, the wireless power may be transmitted through the resonance frequency band.

The method according to the first embodiment may further include determining at least one target wireless power transmission apparatus when the first reception sensitivity falls below a reference value during transmission of the wireless power, and transmitting a handover request message including characteristics and state information about the wireless power reception apparatus to the target wireless power transmission apparatus over the network.

The method according to the first embodiment may further include determining at least one target wireless power transmission apparatus when efficiency of power transmission to the wireless power reception apparatus falls below a reference value during transmission of the wireless power, and transmitting a handover request message including characteristics and state information about the wireless power reception apparatus to the target wireless power transmission apparatus over the network.

Here, the characteristic and state information about the wireless power reception apparatus may include at least one of reception sensitivity information about the Bluetooth signal, identification information about the wireless power reception apparatus, information about the amount of power required by the wireless power reception apparatus, information about a charging state of the wireless power reception apparatus, information about a version of software installed on the wireless power reception apparatus, authentication and security information about the wireless power reception apparatus, neighboring and/or candidate wireless power transmission apparatus list information corresponding to the wireless power reception apparatus, sub-in-band channel allocation information allocated to the wireless power reception apparatus, and Bluetooth communication connection information corresponding to the wireless power reception apparatus.

In addition, when the handover request message is received by the target wireless power transmission apparatus, the target wireless power transmission apparatus may initiate transmission of the wireless power to the wireless power reception apparatus without sending out the beacon signal.

The method may further include generating a candidate wireless power transmission apparatus list based on the first to n-th reception sensitivities, wherein the target wireless power transmission apparatus may be determined from the candidate wireless power transmission apparatus list.

In addition, when a plurality of target wireless power transmission apparatuses is determined from the candidate wireless power transmission apparatus list, the determined plurality of target wireless power transmission apparatuses may be controlled to supply the wireless power to the wireless power reception apparatus simultaneously.

The method may further include, when the handover complete message is received from the target wireless power transmission apparatus, stopping transmission of the wireless power and determining whether the serving wireless power transmission apparatus is a candidate wireless power transmission apparatus, based on the first to n-th reception sensitivities.

In addition, when it is determined that the serving wireless power transmission apparatus is the candidate wireless power transmission apparatus, the uplink Bluetooth signal may be monitored.

In addition, when it is determined that the serving wireless power transmission apparatus is not the candidate wireless power transmission apparatus, the beacon signal may be periodically transmitted.

The method may further include receiving transmitter state information from the at least one wireless power transmission apparatus connected to the network, wherein the amount of power to be transmitted to the wireless power reception apparatus for each of the at least one determined target wireless power transmission apparatus may be determined based on the transmitter state information.

The transmitter state information may include at least one of information about a maximum transmission power intensity, information about the number of currently connected wireless power reception apparatuses, information about the maximum number of serviceable wireless power reception apparatuses, information about the amount of available transmission power, and sub-in-band allocation information allocated for each of the connected wireless power reception apparatuses.

In a second embodiment, a computer-readable recording medium on which a program for executing one of the methods for controlling the wireless power is recorded.

In a third embodiment, a system for controlling wireless power may include first to n-th wireless power transmission apparatuses configured to activate a Bluetooth function when power is applied, transmit a beacon signal through a resonance frequency band, measure a reception sensitivity of an uplink Bluetooth signal and exchange information about the measured reception sensitivity over a network, and a wireless power reception apparatus configured to broadcast an advertisement signal when the beacon signal is sensed, wherein the first to n-th wireless power transmission apparatuses may determine whether to transmit wireless power to the wireless power reception apparatus based on information about the exchanged reception sensitivity.

Here, the beacon signal and the Bluetooth signal may be transmitted and received through different frequency bands.

In addition, the network may be a wired or wireless IP communication network.

In addition, a serving wireless power transmission apparatus among the first to n-th wireless power transmission apparatuses may identify at least one candidate wireless power transmission apparatus based on the exchanged reception sensitivity, determine, when it is recognized that the reception sensitivity of the Bluetooth signal in the serving wireless power transmission apparatus is less than or equal to a reference value, a target wireless power transmission apparatus of the at least one candidate wireless power transmission apparatus and then transmit a predetermined handover request message to the determined target wireless power transmission apparatus.

In addition, the serving wireless power transmission apparatus among the first to the n-th wireless power transmission apparatuses may generate a candidate wireless power transmission apparatus list based on the exchanged reception sensitivity, determine, when it is recognized that efficiency of power transmission to the wireless power reception apparatus is less than or equal to a reference value, a target wireless power transmission apparatus in the candidate wireless power transmission apparatus list and then transmit a predetermined handover request message to the determined target wireless power transmission apparatus.

When the serving wireless power transmission apparatus receives a handover complete message from the target wireless power transmission apparatus, transmission of the wireless power may be stopped and it may be determined whether the serving power transmission apparatus is a candidate power transmission apparatus, based on the first to n-th reception sensitivities.

When it is determined that the serving wireless power transmission apparatus is the candidate wireless power transmission apparatus, the uplink Bluetooth signal may be monitored.

When it is determined that the serving wireless power transmission apparatus is not the candidate wireless power transmission apparatus, the beacon signal may be transmitted with a predetermined periodicity.

The first to n-th wireless power transmission apparatuses may exchange transmitter state information over the network, wherein the transmitter state information may include at least one of information about a maximum transmission power intensity, information about the number of currently connected wireless power reception apparatuses, information about the maximum number of serviceable wireless power reception apparatuses, information about the amount of available transmission power, and sub-in-band allocation information allocated for each of the connected wireless power reception apparatuses.

In a first embodiment, a power transmission apparatus may include a power transmission module configured to transmit a beacon signal and wireless power using a resonance frequency band, a first communication module configured to sense a Bluetooth signal broadcast by a wireless power reception apparatus, a reception sensitivity measurement module configured to measure a reception sensitivity of the sensed Bluetooth signal, and a second communication module configured to exchange information about the measured reception sensitivity with a network-connected wireless power transmission apparatus, wherein whether or not to transmit wireless power to the wireless power reception apparatus may be determined based on information about the exchanged reception sensitivity.

In addition, characteristics and state information about the wireless power reception apparatus may be received through the first communication module and may be exchanged with the network-connected wireless power transmission apparatus through the second communication module.

In addition, transmitter state information may be exchanged with the network-connected wireless power transmission apparatus through the second communication module.

When the measured reception sensitivity falls below a reference value, a target wireless power transmission apparatus may be determined from a list of candidate wireless power transmission apparatuses generated based on information about the exchanged reception sensitivity.

When a handover complete message is received from the target wireless power transmission apparatus, transmission of the wireless power to the wireless power reception apparatus may be stopped, and it may be determined whether the wireless power transmission apparatus is a candidate wireless power transmission apparatus, based on the information about the exchanged reception sensitivity.

Here, when it is determined that the wireless power transmission apparatus is the candidate wireless power transmission apparatus as a result of the determination, the Bluetooth signal may be monitored.

Here, when it is determined that the wireless power transmission apparatus is not the candidate wireless power transmission apparatus as a result of the determination, the beacon signal may be transmitted with a predetermined periodicity.

The above-described aspects of the present disclosure are merely a part of preferred embodiments of the present disclosure. Those skilled in the art will derive and understand various embodiments reflecting the technical features of the present disclosure from the following detailed description of the present disclosure.

[Advantageous Effects]

The method and apparatus according to the embodiments have the following effects.
First, according to embodiments, power may be seamlessly supplied to a wireless power reception apparatus that is moving.
Second, according to embodiments, wireless power may be seamlessly supplied to a moving wireless power reception apparatus through cooperation between network-connected wireless power transmission apparatuses.
Third, embodiments provide a network-based wireless power control method capable of maximizing power transmission efficiency by sharing characteristics and state information about a wireless power reception apparatus between network-connected wireless power transmission apparatuses, and an apparatus and system therefor.
Fourth, according to embodiments, charging is allowed regardless of movement of a wireless power reception apparatus, and accordingly improvement in emotional quality may be expected.
Fifth, according to embodiments, wireless power transmission efficiency may be maximized by adaptively determining a transmitter to transmit wireless power based on the radio quality of a reference signal received from a wireless power reception apparatus.
It will be appreciated by those skilled in the art that that the effects that can be achieved through the embodiments of the present disclosure are not limited to those described above and other advantages of the present disclosure will be more clearly understood from the following detailed description.

[Description of Drawings]

The accompanying drawings, which are included to provide a further understanding of the invention and are incorporated in and constitute a part of this application, illustrate embodiments of the disclosure and together with the description serve to explain the principle of the disclosure.

FIG. 1 is a diagram illustrating a wireless power control system according to an embodiment of the present disclosure.
FIGs. 2 to 5 specifically illustrate a method of seamlessly transmitting wireless power to a wireless power receiver that is moving according to an embodiment of the present disclosure.
FIG. 6 is a flowchart illustrating a wireless power transmission method according to an embodiment of the present disclosure.
FIG. 7 is a flowchart illustrating a handover procedure of a wireless power transmitter according to an embodiment of the present disclosure.
FIG. 8 illustrates configuration of a wireless power control system according to another embodiment of the present disclosure.
FIG. 9 is a flowchart illustrating a handover procedure of a wireless power transmitter according to another embodiment of the present disclosure.
FIG. 10 is a flowchart illustrating a wireless power transmission control method according to an embodiment of the present disclosure.
FIG. 11 is a block diagram illustrating the structure of a wireless power transmission apparatus according to an embodiment of the present disclosure.
FIG. 12 is a flowchart illustrating a procedure of wireless power control in a wireless power transmission apparatus according to an embodiment of the present disclosure.
FIG. 13 is a flowchart illustrating a handover procedure in a wireless power transmission apparatus according to an embodiment of the present disclosure.

[Best Mode]

According to a first embodiment of the present disclosure, a method for controlling wireless power by a serving wireless power transmission apparatus may include activating a Bluetooth function when power is applied, transmitting a beacon signal using a resonance frequency band, measuring, when an uplink Bluetooth signal generated by a wireless power reception apparatus is sensed, a first reception sensitivity of the Bluetooth signal, and receiving second to n-th reception sensitivities corresponding to the Bluetooth signal from at least one other network-connected wireless power transmission apparatus, and determining whether wireless power is transmittable based on the first to n-th reception sensitivities.

[Mode for Invention]

Hereinafter, an apparatus and various methods to which embodiments of the present disclosure are applied will be described in detail with reference to the drawings. As used herein, the suffixes "module" and "unit" are added or used interchangeably to facilitate preparation of this specification and are not intended to suggest distinct meanings or functions.
In the description of the embodiments, it is to be understood that when an element is described as being "on" or "under" another element, it can be "directly" on or under another element or can be "indirectly" formed such that one or more other intervening elements are also present between the two elements. In addition, when an element is described as being "on" or "under," the term "on" or "under" may refer to not only the upper side but also the lower side with respect to the element.
In the description of the embodiments, "wireless power transmitter," "wireless power transmission apparatus," "transmission terminal," "transmitter," "transmission apparatus," "transmission side," and the like will be interchangeably used to refer to a device for transmitting wireless power in a wireless power system, for simplicity. In addition, "wireless power reception apparatus," "wireless power receiver," "reception terminal," "reception side," "reception apparatus," "receiver," and the like will be interchangeably used to refer to a device for receiving wireless power from a wireless power transmission apparatus, for simplicity.

The transmitter according to the present disclosure may be configured as a pad type, a cradle type, an access point (AP) type, a small base station type, a stand type, a ceiling embedded type, a wall-mounted type, or the like. One transmitter may include at least one wireless power transmission means to transmit power to a plurality of wireless power reception apparatuses. Here, the wireless power transmission means may use at least one of an electromagnetic resonance scheme, in which a magnetic field of a transmission coil is tuned to a specific resonance frequency to transmit power to a wireless power receiver located at a short distance, and a wireless power transmission scheme, in which low-power energy is transmitted to a remote receiver over an RF signal.

The electromagnetic resonance scheme is a method of transmitting wireless power using magnetic resonance between transmission and reception coils. Specifically, this is a wireless charging scheme in which a transmission coil generates a magnetic field that oscillates at a specific resonance frequency, and energy is concentratedly transmitted only to a reception coil designed with the same resonance frequency.

In the RF wireless power transmission scheme, the reception terminal may be equipped with a rectenna, which includes an antenna, a low-pass filter, a rectifier, a DC pass filter, and a load resistor. The antenna serves to receive an RF signal, and the received RF signal may be transmitted to the rectifier via the low-pass filter. The rectifier may include a Schottky diode, which is a nonlinear element, for example. A high-order mode of the received RF signal as well as DC power may be generated in the diode. The low-pass filter may be placed between the antenna and the diode to prevent re-emission of this high-order mode to the antenna. In addition, in the reception terminal, the DC pass filter may be placed between the diode and the load to prevent the RF signal from being transmitted to the load and control only the DC component to be transmitted to the load.

Further, the receiver according to embodiments may include a plurality of wireless power reception means, and may receive wireless power from two or more transmitters simultaneously. Here, the wireless power reception means may include the electromagnetic resonance scheme and the RF wireless power transmission scheme.

In addition, the wireless power transmission apparatus and the wireless power reception apparatus may perform communication using a separate out-of-band frequency different from the frequency band used for wireless power transmission, that is, the in-band frequency band. For example, short-range wireless communication technologies such as Bluetooth, near field communication (NFC), radio frequency identification (RFID), and Zigbee may be employed as the out-of-band frequency communication technology. As another example, mobile communication technologies such as Wideband Code Division Multiple Access (WCDMA), Long Term Evolution (LTE)/LTE-Advanced, and Wi-Fi may be employed as the out-of-band frequency communication technology.

A wireless power transmitter according to an embodiment may communicate with another wireless power transmitter over a network. Here, the network may be a wired or wireless communication network. For example, the wired network may include Ethernet, Local Area Network (LAN), and Controller Area Network (CAN). The wireless communication network may include a Wi-Fi communication network, a mobile communication network, a public frequency communication network, a Bluetooth communication network, and a Radio Frequency Identification (RFID) communication network.

When the wireless power transmitter is connected over Ethernet, the wireless power transmitter may be assigned an IP address and thus perform IP communication.

The wireless power receiver may also be assigned an IP address, and the wireless power transmitter and the wireless power receiver may perform out-of-band communication using the assigned IP addresses.

The wireless power receiver according to the present disclosure may be employed in small electronic devices such as a mobile phone, a smartphone, a laptop computer, a digital broadcast terminal, a PDA (Personal Digital Assistant), a PMP (Portable Multimedia Player), a navigation system, an MP3 player, and a wearable device. However, embodiments are not limited thereto, and the wireless power receiver may be employed in any devices which are provided with the wireless power reception means according to the present disclosure and are powered by a charged battery. A wireless power reception apparatus according to another embodiment of the present disclosure may also be employed in a robot, a vehicle, a drone, and the like which are provided with a wireless communication means. For example, the unmanned robot may be fixedly installed in a predetermined area in a factory, or may move within a certain area within the factory and receive wireless power from a wireless power transmission apparatus while moving.

Alternatively, when an electric vehicle is traveling or stops at an intersection for a while, a wireless power transmission apparatus installed in the vicinity of the road may sense the above operations and transmit wireless power to the electric vehicle or the wireless power reception apparatus mounted in the electric vehicle.

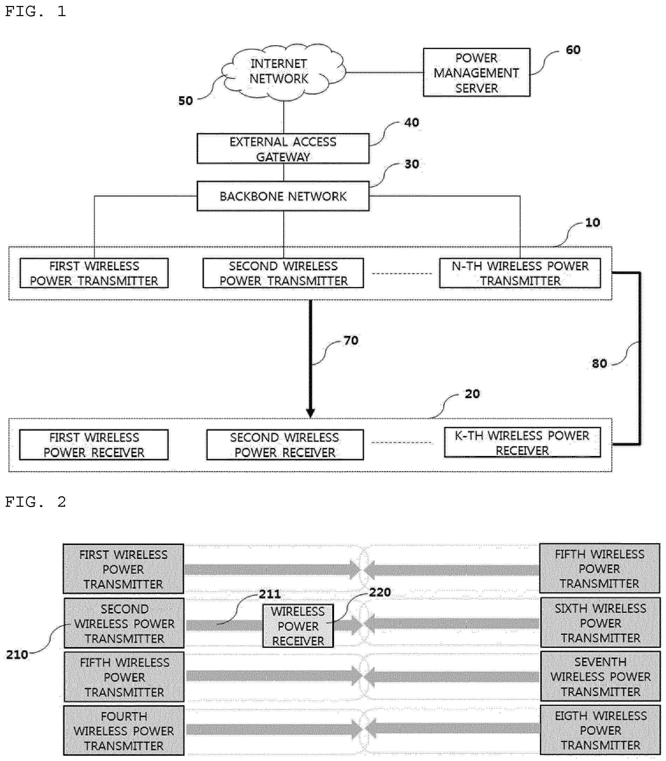

FIG. 1 is a diagram illustrating a wireless power control system according to an embodiment of the present disclosure.

Referring to FIG. 1, a wireless power control system according to an embodiment may include first to n-th wireless power transmitters 10, first to k-th wireless power receivers 20, a backbone network 30, an external access gateway 40, an Internet network 50, and a power management server 60.

It should be noted that the components of the wireless power control system are not essential, and more or fewer components may be provided.

The first to n-th wireless power transmitters 10 may transmit wireless power 70 to the corresponding wireless power receivers using a first frequency band, and exchange various control signals 80 for wireless power control with the first to k-th wireless power receivers 20 using a second frequency band. Hereinafter, the first frequency band and the second frequency band are used interchangeably with an in-band 70 and an out-of-band 80, respectively. Here, in-band may refer to a frequency band in which wireless power is actually transmitted, and may be a frequency channel through which a wireless power signal is unidirectionally transmitted. On the other hand, out-of-band may refer to a frequency band used for bidirectional wireless communication technology for exchanging control information necessary for wireless power transmission and/or various data. For example, when the wireless power is transmitted in the resonance scheme, the in-band may be a resonance frequency band. When the control signal is exchanged through Bluetooth communication, the out-of-band may be a standard frequency band allocated to Bluetooth communication.

In addition, the wireless power transmitter and the wireless power receiver may include various sensors, and various sensing information sensed by the sensors may be exchanged between the wireless power transmitter and the wireless power receiver on an out-of-band communication channel.

The wireless power transmitter and the wireless power receiver may also exchange state information about the transmitter and/or the receiver as well as various control signals for power control through out-of-band communication.

Here, the state information about the transmitter may include at least one of maximum transmission power intensity information, available power amount information, information about the number of available receivers, information about change in the available power amount, information about supportable wireless power transmission schemes, IP address information, and MAC (Media Access Control) address information.

The state information about the receiver may include at least one of information about the charging state, charging completion information, reference voltage and/or current information, information about power reception efficiency, information about the version of the embedded software, information about supportable wireless power transmission schemes, IP address information, and MAC address information.

The wireless power transmitter and the wireless power receiver may also transmit and receive multimedia data, including, for example, moving pictures, sound sources, images, and text, via out-of-band communication. Here, transmission/reception of the multimedia data may be controlled based on the charging state of the wireless power receiver. For example, when the charging level of the wireless power receiver is higher than or equal to a reference value or the power reception efficiency is higher than or equal to a reference value, transmission/reception of predetermined multimedia data may be performed.

The in-band according to an embodiment may be divided into a plurality of sub-in-bands, and a wireless power transmitter may transmit wireless power to a wireless power receiver using at least one sub-in-band. In this operation, the wireless power transmitter may minimize frequency interference between the receivers during the wireless power transmission by allocating different sub-in-bands to the respective wireless power receivers. A guard frequency band may be inserted between adjacent sub-in-bands to minimize interference between adjacent frequencies.

A wireless power receiver to receive wireless power from two wireless power transmitters simultaneously may receive wireless power from the two wireless power transmitters simultaneously using an antenna for receiving the same sub-in-band signal or a reception resonance coil.

In another example, a wireless power receiver may receive wireless power from a plurality of wireless power transmitters simultaneously using a plurality of rectennas and/or a plurality of reception resonance coils. In this case, different sub-in-bands used for wireless power transmission may be allocated to the respective wireless power transmitters, and the wireless power receiver may receive the energy transmitted through the different sub-in-bands using the plurality of reception resonance coils.

The first to n-th wireless power transmitters 10 may exchange control information with each other over the backbone network 50. The first to n-th wireless power transmitters 10 may also communicate with an external server (e.g., the power management server 60) over the backbone network 50.

The power management server 60 may collect the current wireless power transmission state information about the first to n-th wireless power transmitters 10 and statistically process the information. Here, the wireless power transmission state information may include current transmission power amount information, information about the number of connected wireless power receivers, available power amount information, power allocation information about each wireless power receiver, and charging state information about each wireless power receiver. The power management server 60 may determine, based on the result of the statistical processing, whether a wireless power transmitter is added/changed/removed and whether redesign of arrangement of the wireless power transmitters is necessary.

Further, the power management server 60 may set various parameters necessary for power control of the first to n-th wireless power transmitters 10 and transmit the parameter setting information to the first to n-th wireless power transmitters 10.

The first to n-th wireless power transmitters 10 may exchange the characteristics and state information about the first to k-th wireless power receivers 20 over the backbone network 50 through at least one predetermined control message. Here, the receiver characteristics and state information may include information about reception sensitivity to an advertisement signal, receiver identification information, receiver required current and voltage information, receiver charging state information, such as, for example, total charging level information, current charging voltage/current information, and total charging time information, receiver software version information, authentication and security information, neighbor and/or candidate transmitter list information, sub-in-band channel allocation information about each receiver, and second frequency band access information.

According to exchange of the receiver characteristics and state information, the first to n-th wireless power transmitters 10 may not only more quickly identify the wireless power receivers to transmit wireless power, but also seamlessly transmit wireless power to a moving wireless power receiver.

For example, when a wireless power receiver receiving power from a first wireless power transmitter moves to a transmission coverage of a second wireless power receiver, the first wireless power transmitter may transmit the receiver characteristics and state information about the corresponding wireless power receiver to the second wireless power receiver over the backbone network 30. At this time, the second wireless power transmitter may immediately start power transmission based on the received receiver state information, without performing a separate receiver detection procedure and a separate receiver identification procedure. Here, when the wireless power transmission scheme is the resonance scheme, the receiver detection procedure and the receiver identification procedure may correspond to a procedure of transmitting a short beacon and a procedure of transmitting a long beacon, respectively. Here, the short beacon may be a pulse signal having a predetermined periodicity for a unit time, and may be a signal for detecting whether the receiver is present within the coverage area of the transmitter. If the receiver is within the coverage area, change in the strength of the electromagnetic field fed back to the transmitter may occur, and the transmitter may determine if a receiver is present, based on the change in strength of the electromagnetic field. The long beacon may be a signal transmitted by the transmitter to identify a receiver when presence of the receiver is detected. When the receiver detects a long beacon, the receiver may broadcast an advertisement signal for out-of-band communication connection. For example, if the out-of-band communication is Bluetooth communication, the advertisement signal may be a Bluetooth beacon signal. Here, the Bluetooth beacon signal may be transmitted including the characteristics and state information about the receiver.

While the wireless power receiver is located in an area where the transmission coverage of the first wireless power transmitter and the transmission coverage of the second wireless power transmitter overlap, the wireless power receiver may receive power from the first and second wireless power transmitters simultaneously. In this case, the first wireless power transmitter and the second wireless power transmitter may measure a reception sensitivity of a predetermined reference signal generated by the wireless power receiver, and exchange information about the measured reception sensitivity with each other over the backbone network 30. Subsequently, the first wireless power transmitter and the second wireless power transmitter may determine a power transmission ratio based on the reception sensitivity of the exchanged reference signal. The power transmission ratio in the first wireless power transmitter and the second wireless power transmitter may be determined by further considering at least one of the amount of power currently available in the corresponding transmitter and the amount of power required by the wireless power receiver.

For example, if the reception sensitivity of the reference signal sensed by the second wireless power transmitter is better than the reception sensitivity of the reference signal sensed by the first wireless power transmitter, it may be determined that the second wireless power transmitter has a better wireless power transmission environment than the first wireless power transmitter. As a result, a relatively large amount of power may be transmitted to the corresponding wireless power receiver.

If the amount of power for the second wireless power transmitter to transmit, which is determined according to the reception sensitivity of the reference signal, exceeds the amount of available power of the corresponding transmitter, the second wireless power transmitter may transmit, to the first wireless power transmitter, a predetermined additional power transmission request signal including the exceeded amount. Subsequently, the first wireless power transmitter may change the strength of power to be transmitted to the wireless power receiver, based on the additional power transmission request.

When the out-of-band communication scheme according to an embodiment of the present disclosure is Bluetooth communication, the reference signal may be a Bluetooth beacon signal, and the reception sensitivity of the reference signal may be a received signal strength indicator (RSSI) of a Bluetooth beacon signal. Here, the Bluetooth beacon signal generated by the wireless power receiver may be an advertisement signal according to the present disclosure, and the reception sensitivity of the advertisement signal may be measured by automatically activating the Bluetooth function when power is applied to the wireless power transmitter. Here, the wireless power receiver may transmit the advertisement data including advertisement data. Here, the advertisement data may include wireless power transmission service identifier information (for example, UUID (Universal User Identification)), power consumption class information about the wireless power receiver, and Bluetooth beacon output power intensity information.

Here, the wireless power transmission service identifier may be unique service identification information for identifying whether the wireless power receiver is a legitimate service subscription device. As an example, a specific wireless power receiver may be configured to receive power only from a specific wireless power transmitter. In this case, the wireless power transmitter may determine whether the wireless power receiver is a power transmission target device based on the wireless power transmission service identifier.

The power consumption class of the wireless power receiver may be used to determine whether the wireless power transmitter is capable of transmitting power corresponding to the current power consumption class based on the currently available power amount. If the power consumption class exceeds the currently available power amount, the wireless power transmitter may not include the wireless power receiver in the service target devices.

The Bluetooth beacon output power intensity information may be used as reference information for determining the reception sensitivity of the Bluetooth beacon. That is, the wireless power transmitter may measure the degree of signal attenuation by comparing the receive power intensity of the Bluetooth beacon with the Bluetooth beacon output power intensity, and determine the reception sensitivity according to the measured degree of signal attenuation. In one embodiment, the wireless power transmitter may measure the degree of signal attenuation in units of dBm (decibels above 1 milliwatt), the transmitter may determine that the degree of signal attenuation is inversely proportional to reception sensitivity.

According to another embodiment of the present disclosure, a reference signal may be generated by a wireless power transmitter. In this case, the wireless power receiver may measure the reception sensitivities of reference signals for the respective wireless power transmitters to identify reference signals having a reception sensitivity that is greater than a reference value, and transmit the identified wireless power transmitter-specific reception sensitivity information to the wireless power transmitters on the out-of-band channel 80. Subsequently, the wireless power transmitter may determine whether to transmit power to the wireless power receiver based on the received reception sensitivity information. The wireless power transmitter may also determine the amount of power to transmit to the wireless power receiver based on the received reception sensitivity information.

While it is illustrated in FIG. 1 that the wireless power transmitters exchange information over the wired backbone network 30, this is merely one embodiment. It should be noted that a wireless power transmitter according to another embodiment of the present disclosure is capable of exchanging information through wireless communication. Here, the wireless communication may be any one of Wi-Fi communication, Bluetooth communication, RFID communication, WCDMA communication, and LTE/LTE-A communication.

Hereinafter, a method of seamlessly transmitting wireless power to a moving wireless power receiver will be described in detail with reference to FIGs. 2 to 5. It should be noted that Bluetooth communication is described as an example of out-of-band communication, but embodiments are not limited thereto.

As shown in FIG. 2, it is assumed that a wireless power receiver 220 is located within the coverage area of a second wireless power transmitter 210.

The second wireless power transmitter 210 may transmit a predetermined detection signal 211 for detecting and identifying the wireless power receiver 220 through the in-band. For example, when the in-band is a resonance frequency band, the detection signal may be a beacon signal having a periodic pulse pattern for a unit time. In addition, the pulse signal strength may be increased to a certain level for the unit time. Here, the beacon signal may include a first beacon signal (short beacon) for sensing presence of a wireless power receiver and a second beacon signal (long beacon) for identifying the sensed wireless power receiver.

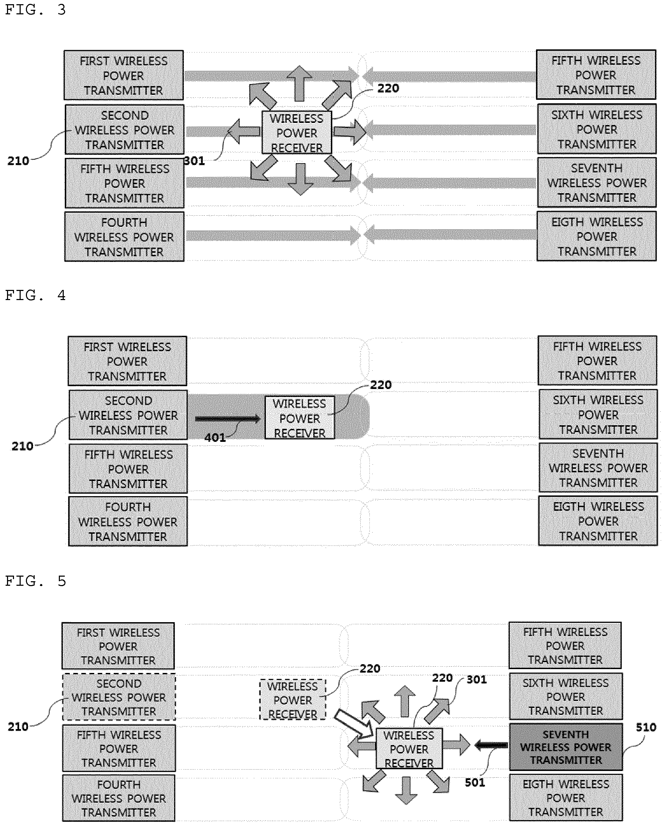

Referring to FIG. 3, when the detection signal 211 is sensed, the wireless power receiver 220 may broadcast a predetermined advertisement signal 301 on the Bluetooth channel.

Here, it should be noted that, when power is applied, the Bluetooth function of the wireless power transmitter is automatically activated, and the advertisement signal 301 broadcast by the wireless power receiver may be sensed.

When the advertisement signal 301 is sensed on the Bluetooth channel, the second wireless power transmitter 210 may measure the reception sensitivity of the advertisement signal and exchange information about the measured reception sensitivity with other network-connected wireless power transmitters.

At this time, a wireless power transmitter having the highest reception sensitivity may be determined as a serving wireless power transmitter based on the exchanged information about the reception sensitivity. In addition, a predetermined number of wireless power transmitters with the next highest reception sensitivity may be determined as candidate wireless power transmitters.

Referring to FIG. 3, the second wireless power transmitter 210 may be the serving wireless power transmitter, and the first wireless power transmitter and the third wireless power transmitter adjacent thereto may be candidate wireless power transmitters. It should be noted that the candidate wireless power transmitter may, if necessary, cooperate with the serving wireless power transmitter to transmit wireless power to the wireless power receiver 220. As an example, if transmittable power of the second wireless power transmitter 210, which is the serving wireless power transmitter, fails to meet the required power of the wireless power receiver 210, the second wireless power transmitter 210 may send, to the candidate wireless power transmitters, a request for power transmission to the wireless power receiver 220. Here, the amount of power for which the request is made to the candidate wireless power transmitters may be determined so as to meet the required power of the wireless power receiver 210.

The number of candidate wireless power transmitters per wireless power receiver may be preset in the wireless power transmitter using predetermined system parameters. Each wireless power transmitter may determine whether the wireless power transmitter itself is a serving transmitter or a candidate transmitter based on the information about the preset number of candidate wireless power transmitters and the information about the reception sensitivity of the exchanged advertisement signal. The result of determining whether the wireless power transmitter is a serving/candidate transmitter may be shared among the wireless power transmitters over a wired or wireless network.

If the second wireless power transmitter 210 is determined as a serving wireless power transmitter, the second wireless power transmitter 210 may transmit wireless power 401 to the wireless power receiver 220 through the in-band as shown in FIG 4. In this operation, the second wireless power transmitter 210 may establish a Bluetooth communication connection with the wireless power receiver 220, and the transmitter and the receiver may exchange state information thereon through the established Bluetooth communication connection. The second wireless power transmitter 210 may dynamically control the intensity of the transmission power based on the state information received from the wireless power receiver 220

As shown in FIG. 5, the wireless power receiver 220 may move from the transmission coverage of the second wireless power transmitter 210 to the transmission coverage of a seventh wireless power transmitter 510. In this case, if the reception sensitivity of the Bluetooth beacon signal received from the wireless power receiver 220 falls below a predetermined handover reference value, the second wireless power transmitter 210 may transmit a handover request signal including pre-collected characteristics and state information about the wireless power receiver 220 collected by the base station to another network-connected wireless power transmitter (e.g., the seventh wireless power transmitter).

According to an embodiment, when it is confirmed that the reception efficiency of the power received from the second wireless power transmitter 210 falls below a predetermined reference value, the wireless power receiver 220 may automatically broadcast the advertisement signal 301.

In this case, when it is confirmed that the reception sensitivity of the advertisement signal 301 is higher than or equal to a reference value, the seventh wireless power transmitter 510 may establish a Bluetooth connection with the wireless power receiver 220 and begins to transmit wireless power 501 through the in-band. At this time, it should be noted that a wireless power transmitter having the reception sensitivity of the advertisement signal 301 lower than or equal to a reference value does not transmit wireless power to the wireless power receiver 220.

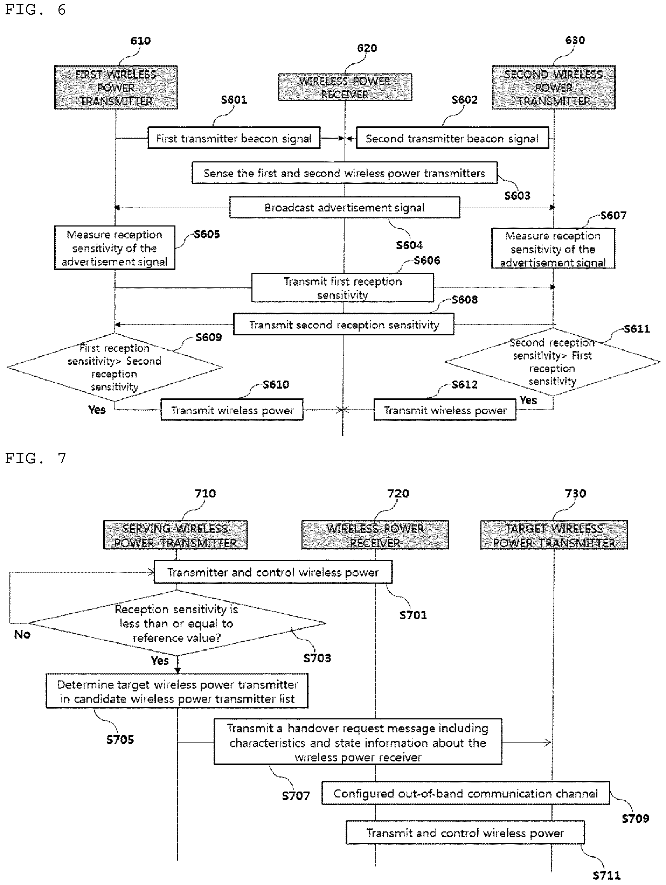

FIG. 6 is a flowchart illustrating a wireless power transmission method according to an embodiment of the present disclosure. Specifically, FIG. 6 illustrates a method of seamlessly transmitting power to a moving wireless power receiver through a plurality of network-connected wireless power transmitters.

Referring to FIG. 6, a first wireless power transmitter 610 and a second wireless power transmitter 630 may transmit a predetermined beacon signal for sensing and identifying a wireless power receiver 620 when powered on (S601 and S602).

The wireless power receiver 620 may broadcast an advertisement signal when the beacon signals transmitted by the first wireless power transmitter 610 and the second wireless power transmitter 630 are sensed (S603 and S604).

When the advertisement signal is sensed, the first wireless power transmitter 610 may measure the reception sensitivity of the advertisement signal and transmit the measured reception sensitivity (hereinafter, referred to as a first reception sensitivity) to the second wireless power transmitter 630 connected to a network (S605 and S606).

When the advertisement signal is sensed, the second wireless power transmitter 620 may measure the reception sensitivity of the advertisement signal and transmit the measured reception sensitivity (hereinafter, referred to as a second reception sensitivity) to the first wireless power transmitter 610 connected to the network (S607 to S608).

If the first reception sensitivity is better than the second reception sensitivity, the first wireless power transmitter 610 may initiate wireless power transmission (S609 and S610).

If it is confirmed that the second reception sensitivity is greater than the first reception sensitivity, the second wireless power transmitter 630 may initiate wireless power transmission (S611 and S612).

While it is illustrated in FIG. 6 that two wireless power transmitters exchange the reception sensitivities of the advertisement signal with each other, and compare the reception sensitivity received from the other wireless power transmitter with the internally measured reception sensitivity to determine whether to perform wireless power transmission, this is merely one embodiment. In another embodiment of the present disclosure, two or more network-connected wireless power transmitters may exchange reception sensitivities of the advertisement signal with each other.

FIG. 7 is a flowchart illustrating a handover procedure of a wireless power transmitter according to an embodiment of the present disclosure.

Referring to FIG. 7, while a serving wireless power transmitter 710 transmits wireless power through the in-band, it may acquire receiver state information through the out-of-band and control the wireless power (S701). In this operation, the serving wireless power transmitter 710 may measure the reception sensitivity of an out-of-band reference signal received from a wireless power receiver 720.

If the measured reception sensitivity falls below a predetermined reference value, the serving wireless power transmitter 710 may determine that wireless power transmitter handover is needed (S703).

The serving wireless power transmitter 710 may determine a target wireless power transmitter in the list of candidate wireless power transmitters and transmit a handover request message containing the characteristics and state information about the wireless power receiver 720 to the determined target wireless power transmitter 730 (S705 to S707) .

In one example, the serving wireless power transmitter 710 may compare the received sensitivities of the previously collected candidate wireless power transmitters to the wireless power receiver 720 to determine a candidate wireless power transmitter with the highest received sensitivity as the target wireless power transmitter.

The target wireless power transmitter 730 may set an out-of-band communication channel based on the received characteristic and state information about the wireless power receiver 720, initiate wireless power transmission to the wireless power receiver 720, and receive receiver state information about the set out-of-band communication channel, thereby controlling the transmission power (S709 to S711).

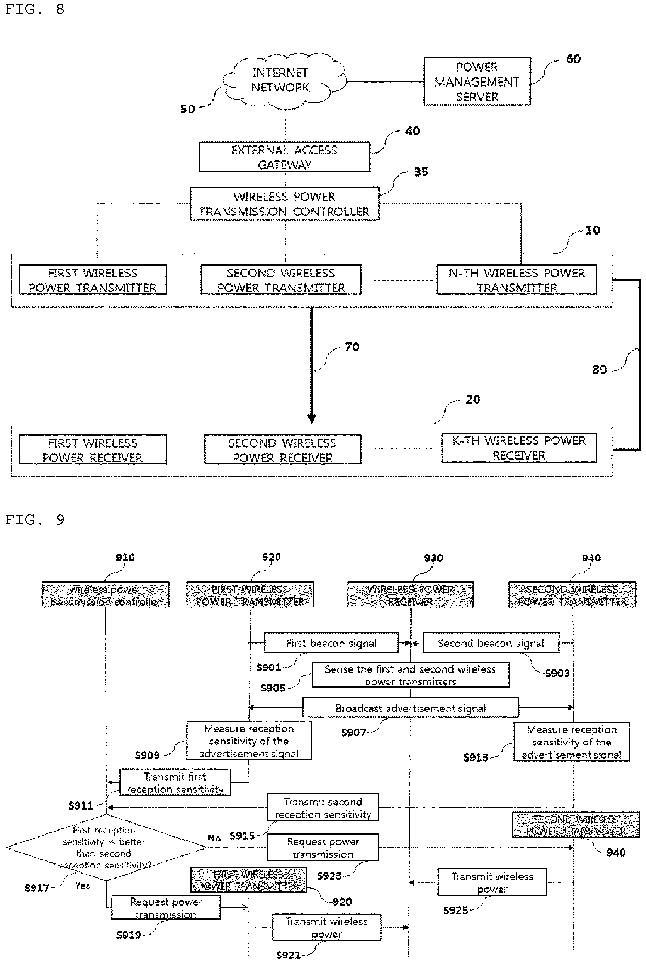

FIG. 8 illustrates configuration of a wireless power control system according to another embodiment of the present disclosure.

Referring to FIG. 8, the wireless power control system may include a wireless power transmission controller 35 operatively connected with the first to n-th wireless power transmitters 10.

The wireless power transmission controller 35 may collect characteristics and state information corresponding to the first to k-th wireless power receivers 20 from the first to the n-th wireless power transmitters 10, and identify a wireless power receiver that needs handover, based on the characteristics and state information.

The wireless power transmission controller 35 may determine the wireless power receiver that needs handover as a target wireless power transmitter. Subsequently, the wireless power transmission controller 35 may transmit, to the target wireless power transmitter, a predetermined handover request message including the characteristics and state information about the wireless power receiver to be handed over. The wireless power transmission controller 35 may also transmit a predetermined control signal to the serving wireless power transmitter to request interruption of power transmission to the wireless power receiver to be handed over.

The wireless power transmission controller 35 may be operatively connected with the power management server 60 via the external access gateway 40. For example, the wireless power transmission controller 35 may perform the authentication and security procedures on the first to k-th wireless power receivers 20 in operative connection with the power management server 60. Here, the authentication procedure is a procedure of identifying whether the corresponding wireless power receiver is a legitimate device or a device registered for service, and the security procedure may be a procedure of setting a security algorithm to be used for out-of-band communication 80 between the first to n-th wireless power transmitters 10 and the first to k-th wireless power receivers 20.

The wireless power transmission controller 35 may also perform the function of relaying the information exchanged between the wireless power transmitters.

For the other functions of the remaining components shown in FIG. 8, refer to the description of FIG. 1.

FIG. 9 is a flowchart illustrating a handover procedure of a wireless power transmitter according to another embodiment of the present disclosure.

Referring to FIG. 9, a first wireless power transmitter 920 and a second wireless power transmitter 940 may transmit a first beacon signal and a second beacon signal, respectively (S901 to S903).

A wireless power receiver 930 may broadcast an advertisement signal when the first beacon signal and/or the second beacon signal is sensed (S905 to S907).

When the advertisement signal is sensed, the first wireless power transmitter 920 may measure the reception sensitivity of the advertisement signal and transmit the measured reception sensitivity (hereinafter, referred to as a first reception sensitivity) to the wireless power transmission controller 910 (S909 to S911).

When the advertisement signal is sensed, the second wireless power transmitter 940 may measure the reception sensitivity of the advertisement signal and transmit the measured reception sensitivity (hereinafter, referred to as a second reception sensitivity) to the wireless power transmission controller 910 (S913 to S915).

If the first reception sensitivity is better than the second reception sensitivity, the wireless power transmission controller 910 may transmit, to the first wireless power transmitter 920, a predetermined control signal requesting power transmission to the wireless power receiver 930 (S917 to S919). Subsequently, the first wireless power transmitter 920 may initiate wireless power transmission to the wireless power receiver 930 (S921).

In step 917, if the second reception sensitivity is better than the first reception sensitivity, a predetermined control signal requesting power transmission to the wireless power receiver 930 may be transmitted to the second wireless power transmitter 940 (S923). Subsequently, the second wireless power transmitter 940 may initiate wireless power transmission to the wireless power receiver 930 (S925).

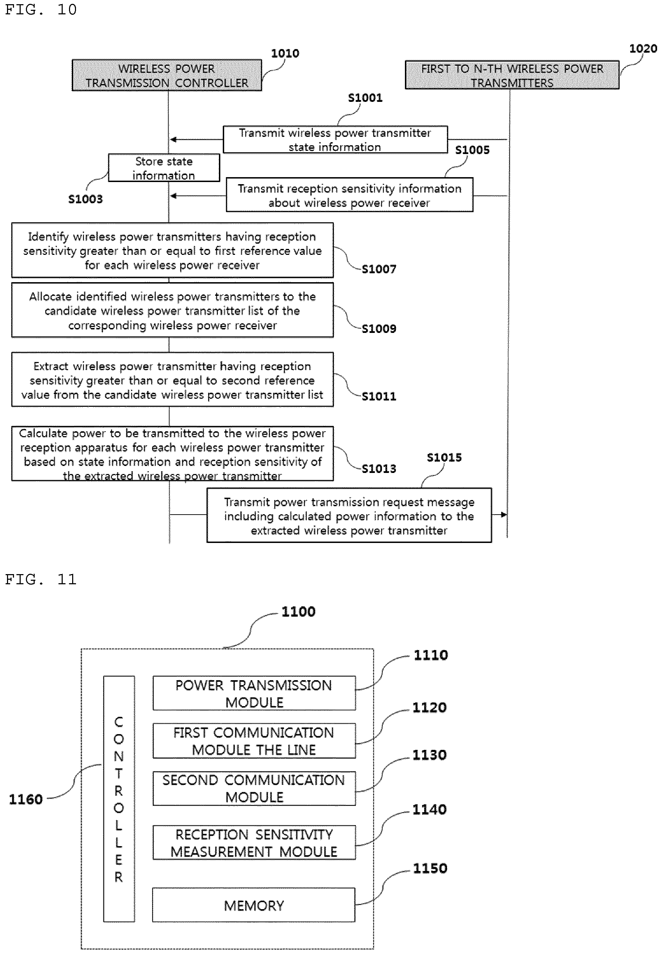

FIG. 10 is a flowchart illustrating a wireless power transmission control method according to an embodiment of the present disclosure.

Referring to FIG. 10, first to n-th wireless power transmitters 1020 may transmit state information about the wireless power transmitters to a wireless power transfer controller 1010. Here, the real-time wireless power transmitter state information may include at least one of maximum transmission power intensity information, information about the number of currently connected wireless power receivers, information about the maximum number of serviceable wireless power receivers, information about the available transmission power amount, and sub-in-band allocation information assigned to each of the connected receivers. Here, in the state information about the wireless power transmitter, the state of the wireless power transmitter may be changed or may be transmitted to the wireless power transmission controller 1010 with a preset periodicity.

The received wireless power transmitter state information may be stored and maintained in an internal memory of the wireless power transmission controller 1010 (S1003).

The first to n-th wireless power transmitters 1020 may also transmit the reception sensitivity information corresponding to the wireless power receivers to the wireless power transmission controller 1010.

The wireless power transmission controller 1010 may identify a wireless power transmitter having a reception sensitivity greater than or equal to a first reference value for each wireless power receiver and may allocate the identified wireless power transmitter to a list of candidate wireless power transmitters corresponding to the wireless power receiver (S1007 to S1009).

The wireless power transmission controller 1010 may extract wireless power transmitters with a reception sensitivity greater than or equal to a second reference value from the list of candidate wireless power transmitters and transmit information about power to be transmitted to the corresponding wireless power receiver according to each wireless power transmitter (which may include, for example, at least one of initial transmission power intensity information, maximum transmission power intensity information, minimum transmission power intensity information, information about the amount of power to be charged, power transmission ratio) based on the extracted state information and/or reception sensitivity of the wireless power transmitter (S1011 to S1013).

In one example, the wireless power transmission controller 1010 may allocate more power to a wireless power transmitter with better reception sensitivity to the advertisement signal. That is, the wireless power transmission controller 1010 may control more power to be charged by a wireless power transmitter expected to have better wireless power transmission efficiency.

It should be noted that in another example, the wireless power transmission controller 1010 is capable of determining the power transmission ratio of the respective wireless power transmitters based on the currently available power amount of the wireless power transmitters as well as the reception sensitivities.

The wireless power transmission controller 1010 may transmit a power transmission request message including the calculated power information to the corresponding wireless power transmitter (S1015).

While the in-band has been described as being a resonance frequency band an example, this is merely one embodiment. In the case where the in-band according to another embodiment of the present disclosure is an RF frequency band, the signal used to identify the wireless power receivers may be a pilot signal for transmitting a continuous RF signal with a constant strength. In this case, the wireless power receiver may broadcast a predetermined advertisement message for out-of-band communication connection on a predetermined uplink shared channel if the strength of the pilot is detected to be greater than or equal to a reference value. Here, the uplink shared channel may be automatically activated when power is applied to the wireless power reception apparatuses on a wireless transmission channel shared by all wireless power receivers included in the wireless power control system.

In the example of FIG. 10 it is illustrated that the wireless power transmission controller 1010 identifies a wireless power transmitter to transmit power to the wireless power reception apparatus based on the reception sensitivity information about the advertisement signal of the wireless power reception apparatus measured by the wireless power transmitter and calculate information related to the power to be transmitted to the corresponding wireless power reception apparatus for each identified wireless power transmitter. However, this is merely an embodiment. In another embodiment of the present disclosure, the first wireless power transmitter may receive state information about the second to n-th wireless power transmitters and the reception sensitivity information about the wireless power receivers connected to the wireless power transmitters from the second to n-th wireless power transmitters, and determine a wireless power transmitter to transmit power to the corresponding wireless power receivers based on the received information. Thereafter, the wireless power transmitter may calculate information about the power to be transmitted to the corresponding wireless power receiver for each determined wireless power transmitter, and then transmit information about the calculated power to the determined wireless power transmitters.

According to another embodiment of the present disclosure, the wireless power transmission controller 1010 may receive information about the power transmission efficiency for each connected wireless power receiver from the first to n-th wireless power transmitters 1020. Here, the power transmission efficiency may be calculated by the transmitter or the receiver based on the receive power intensity at the receiver with respect to the transmit power intensity at the transmitter.

For example, the transmitter may receive the current receive power intensity information about the transmitter over the out-of-band communication channel, and calculate the power transmission efficiency in real time based on the information. In another example, the receiver may receive information about the transmit power intensity of the transmitter over the out-of-band communication channel and compare the same with the receive power intensity to calculate the power transmission efficiency. In this case, the receiver may transmit the information about the calculated power transmission efficiency to the transmitter over the out-of-band communication channel.

FIG. 11 is a block diagram illustrating the structure of a wireless power transmission apparatus according to an embodiment of the present disclosure.

Referring FIG. 11, a wireless power transmission apparatus 1100 may include a power transmission module 1110, a first communication module 1120, a second communication module 1130, a reception sensitivity measurement module 1140, a memory 1150, and a controller 1160.

The power transfer module 1110 may transmit wireless power through the in-band, and use at least one of the electromagnetic resonance scheme and the RF scheme for wireless power transmission.

The power transmission module 1110 providing the electromagnetic resonance scheme may include a transmission induction coil connected to both ends of a power source, and a transmission resonance coil disposed at a certain distance from the transmission induction coil.

In one example, the power source may generate AC power having a predetermined frequency and transmit the same to the transmission induction coil. The transmission induction coil and the transmission resonance coil may be inductively coupled. That is, in the transmission induction coil, an alternating current may be generated by the AC power supplied from the power source, and an alternating current may also be induced in the physically separated transmission resonance coil by electromagnetic induction by the alternating current.

Then, the power transmitted to the transmission resonance coil may be transmitted to the wireless power reception apparatus having the same resonance frequency by the resonance effect.

Power may be transmitted, by resonance, between two LC circuits whose impedances are matched. Such power transmission by resonance enables power transmission with higher transmission efficiency over a longer distance than power transmission by electromagnetic induction.

The power transmission module 1110 providing the RF scheme may include an AC/DC converter for converting the AC supplied from a power source into a DC, a frequency converter for converting the AC/DC-converted DC into a microwave of a specific RF band, and a directional antenna for converting the microwave into an RF signal in the form of a beam and wirelessly transmitting the RF signal.

The power transmission module 1110 may be referred to as a power transmitter.

A first communication module 1120 may provide out-of-band communication with a wireless power reception apparatus. For example, the first communication module 1120 may provide short-range wireless communication including Bluetooth communication. In another example, the first communication module 1120 may provide more long-distance wireless communication such as WCDMA, LTE/LTE-A, and Wi-Fi.

Through the first communication module 1120, the wireless power transmission apparatus 1100 may acquire state information about the wireless power reception apparatus or sense an advertisement signal broadcast by the wireless power reception apparatus.

When the advertisement signal is sensed by the first communication module 1120, the controller 1160 may control the reception sensitivity measurement module 1140 to measure the reception sensitivity of the advertisement signal.

The second communication module 1130 may provide a means for communication with other network-connected wireless power communication devices. The wireless power communication device 1100 may use the second communication module 1130 to exchange at least one of the transmitter state information and the characteristics and state information about the receiver with other network-connected wireless power communication devices.

In an example, the network-connected wireless power communication devices may exchange the information about the reception sensitivity of the advertisement signal through the second communication module 1130.

While the first communication module 1120 and the second communication module 1130 are described separately, communication may be performed by the same communication device.

The communication module may be a device including a transmitter/receiver capable of performing communication using a corresponding network.

The receiver sensitivity measurement module 1140 may measure the reception sensitivity to the advertisement signal. Here, the reception sensitivity may be the RSSI of a Bluetooth signal broadcast by the receiver.

The reception sensitivity measurement module 1140 may include a reception signal detector for detecting the reception sensitivity of a signal received by the transmitter/receiver.

The memory 1150 may maintain various kinds of software and various parameter setting information required for operation of the wireless power transmission apparatus 1100, characteristics and state information about the receiver, transmitter state information, and the like.

The controller 1160 may control the overall operation of the wireless power transmission apparatus 1100.

For example, if the reception sensitivity of the advertisement signal is greater than or equal to a reference value, the controller 1160 may control wireless power transmission to start.

If the reception sensitivity of the advertisement signal is less than the reference value, the controller 1160 may perform a control operation to stop wireless power transmission and monitor only the Bluetooth signal received from the receiver.

In addition, the controller 1160 may control the reception sensitivity information measured through the second communication module 1120 to be transmitted to another network-connected wireless power transmission apparatus.

The controller 1160 may compare the reception sensitivity information measured by the other wireless power transmission apparatus through the second communication module 1120 with the internally measured reception sensitivity information and determine whether to transmit power to a specific wireless power reception apparatus.

In addition, the controller 1160 may not only generate a list of candidate wireless power transmission apparatuses based on the internal measurement and the received reception sensitivity information, but also may determine whether the controller itself is a serving wireless power transmission apparatus or a candidate wireless power transmission apparatus. If it is determined that the controller is a serving wireless power transmission apparatus, the controller 1160 may control wireless power to be transmitted to the wireless power reception apparatus. If it is determined that the controller is a candidate wireless power transmission apparatus, the controller 1160 may perform a control operation to monitor a Bluetooth signal received from the wireless power reception apparatus.

In addition, if a reception sensitivity measured according to a specific wireless power reception apparatus falls below a reference value during wireless power transmission to the specific wireless power reception apparatus, the controller 1160 may perform a control operation to transmit, to a network-connected candidate wireless power transmission apparatus, a predetermined handover request message including at least one of the transmitter state information and the characteristics and state information about the receiver. Here, the candidate wireless power transmission apparatus receiving the handover request message may be a wireless power transmission apparatus having the best reception sensitivity of the Bluetooth signal received from the corresponding wireless power reception apparatus, that is, a target wireless power transmission apparatus. In particular, upon receiving the handover request message, the wireless power transmission apparatus may immediately initiate power transmission without sending a beacon signal for sensing and identifying the receiver.

In addition, once power transmission is initiated, the wireless power transmission apparatus receiving the handover request message may transmit a predetermined handover complete message indicating that handover is completed to the wireless power transmission apparatus that has transmitted the handover request message. Subsequently, the wireless power transmission apparatus receiving the handover complete message may stop power transmission to the wireless power reception apparatus and monitor the Bluetooth signal.

According to another embodiment of the present disclosure, the controller 1160 may monitor the power transmission efficiency for each wireless power reception apparatus. If the power transmission efficiency falls below a reference value, the controller 1160 may transmit a handover request message to a corresponding candidate wireless power transmission apparatus. Here, the power transmission efficiency may be measured by the wireless power reception apparatus and then received via the first communication module.

In another example, the power transmission efficiency may be calculated by the controller 1160 based on the transmission power intensity information at the transmission terminal and the reception power intensity information at the reception terminal. Here, the received power intensity information at the reception terminal may be included in the receiver state information and be received via the first communication module 1120.

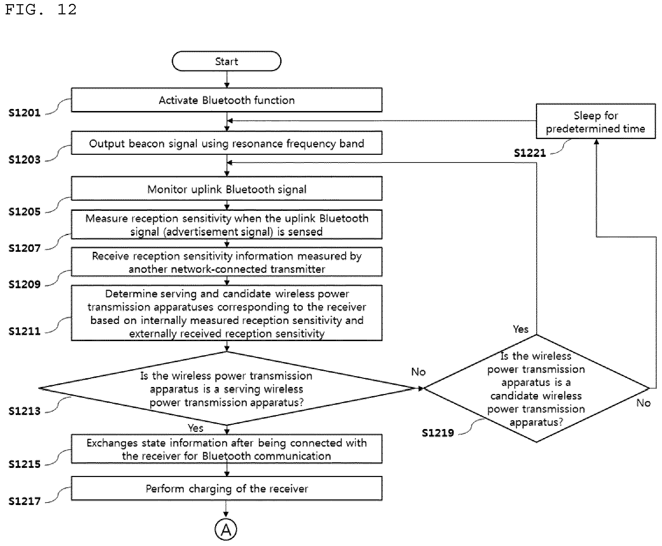

FIG. 12 is a flowchart illustrating a procedure of wireless power control in a wireless power transmission apparatus according to an embodiment of the present disclosure.

The wireless power transmission apparatus according to the embodiment may transmit wireless power using the electromagnetic resonance scheme and exchange state information with a wireless power reception apparatus through Bluetooth communication. In addition, the wireless power transmission apparatus may be operatively connected with another wireless power transmission apparatus over the network.

Referring to FIG. 12, when power is applied to the wireless power transmission apparatus, the Bluetooth function may be automatically activated (S1201).

The wireless power transmission apparatus may output a beacon signal for determining whether the wireless power reception apparatus is present and identifying the wireless power reception apparatus using a resonance frequency band, and monitor the uplink Bluetooth signal (S1203 to S1205). Here, uplink refers to a direction of signal transmission from the wireless power reception apparatus to the wireless power transmission apparatus. On the other hand, downlink refers to a direction of signal transmission from the wireless power transmission apparatus to the wireless power reception apparatus.

When the uplink Bluetooth signal (i.e., the advertisement signal) is sensed, the wireless power transmission apparatus may measure the reception sensitivity of the uplink Bluetooth signal (S1207). Here, the reception sensitivity may be the RSSI of the uplink Bluetooth signal.

The wireless power transmission apparatus may receive reception sensitivity information about the uplink Bluetooth signal measured by other network-connected wireless power transmission apparatus (S1209).

The wireless power transmission apparatus may determine the serving wireless power transmission apparatus and the candidate wireless power transmission apparatuses corresponding to the wireless power reception apparatus based on the internally measured reception sensitivity and the externally received reception sensitivities for each wireless power reception apparatus (S1211).

If the wireless power transmission apparatus is the serving wireless power transmission apparatus, the wireless power transmission apparatus may establish Bluetooth communication with the corresponding wireless power reception apparatus, exchange state information through the established Bluetooth communication, and transmit wireless power to the wireless power reception apparatus to perform the charging operation (S1215 to S1217). At this time, the wireless power transmission apparatus may perform power control based on the receiver state information.

In step 1213, if it is determined that the wireless power transmission apparatus is not the serving wireless power transmission apparatus, the wireless power transmission apparatus may check whether the wireless power transmission apparatus is a candidate wireless power transmission apparatus (S1219).

If the wireless power transmission apparatus is a candidate wireless power transmission apparatus as a result of checking in step 1219, the wireless power transmission apparatus may return to step 1205 to monitor the uplink Bluetooth signal.

If the wireless power transmission apparatus does not correspond to a candidate wireless power transmission apparatus as a result of checking in step 1219, the wireless power transmission apparatus may sleep for a predetermined time period (S1221), and then return to step 1203 to output a beacon signal using the resonance frequency band.

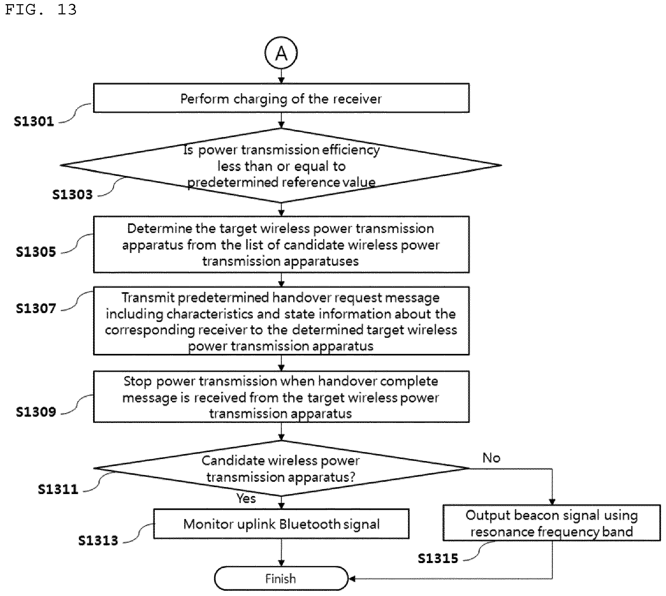

FIG. 13 is a flowchart illustrating a handover procedure in a wireless power transmission apparatus according to an embodiment of the present disclosure.

Specifically, FIG. 13 a flowchart illustrating a procedure for determining whether or not handover is needed while the serving wireless power transmission apparatus transmits wireless power to the wireless power reception apparatus to perform charging and performing handover according to the determination result.

Referring to FIG. 13, the serving wireless power transmission apparatus may monitor whether the power transmission efficiency falls below a predetermined reference value during charging of the corresponding wireless power reception apparatus (S1301 to S1303).

Hereinafter, power transmission efficiency in the wireless power transmission will be briefly described.

In wireless power transmission, quality factor and coupling coefficient may have important meanings. That is, power transmission efficiency may be proportional to each of the quality factor and the coupling coefficient. Therefore, as the value of at least one of the quality factor and the coupling coefficient increases, power transmission efficiency may be improved.

The quality factor may mean an index of energy that may be accumulated in the vicinity of the wireless power transmission apparatus or the wireless power reception apparatus.

The quality factor may vary depending on the operating frequency (w), shape, dimensions, material, etc. of a coil. The quality factor may be given by Equation 1 below.

$$\text{Equation 1}$$

$$Q = w * L / R$$

Here, L denotes inductance of the coil, and R denotes resistance corresponding to the amount of power loss occurring in the coil itself.

The quality factor may have a value from 0 to infinity. The power transmission efficiency between the wireless power transmission apparatus and the wireless power reception apparatus is proportional to the quality factor.

The coupling coefficient means the degree of magnetic coupling between the transmission side coil and the reception side coil, and ranges from 0 to 1.

The coupling coefficient may vary depending on the relative positions or distance between the transmission side coil and the reception side coil.

If the power transmission efficiency falls below a reference value as a result of the monitoring in step 1303, the wireless power transmission apparatus may determine the target wireless power transmission apparatus from the list of candidate wireless power transmission apparatuses (S1305) .

For example, the target wireless power transmission apparatus may be a wireless power transmission apparatus having the highest measured reception sensitivity of the Bluetooth signal received from the wireless power reception apparatus among the candidate wireless power transmission apparatus (es) .

As another example, the target wireless power transmission apparatus may be a wireless power transmission apparatus that has a reception sensitivity of the Bluetooth signal received from the wireless power reception apparatus greater than or equal to a predetermined reference value and is capable of providing the required amount of power of the wireless power reception apparatus among the candidate wireless power transmission apparatus(es).

As another example, the target wireless power transmission apparatus may be a wireless power transmission apparatus that has a reception sensitivity of the Bluetooth signal received from the wireless power reception apparatus greater than or equal to a predetermined reference value and is capable of providing the required amount among the candidate wireless power transmission apparatus(es) while the number of wireless power reception apparatuses currently connected thereto does not exceed the maximum acceptable number of wireless power reception apparatuses.

A serving wireless power transmission apparatus according to another embodiment of the present disclosure may determine a plurality of target wireless power transmission apparatuses based on transmitter state information.

For example, if a wireless power transmission apparatus with the best reception sensitivity of the Bluetooth signal corresponding to the wireless power reception apparatus is determined as a first target wireless power transmission apparatus, the serving wireless power transmitting apparatus may check if the available amount of power of the first target wireless power transmission apparatus can meet the required power amount of the wireless power reception apparatus. If the available amount of power cannot meet the required power amount as a result of the checking, the serving wireless power reception apparatus may determine a second target wireless power transmission apparatus from the list of candidate wireless power transmission apparatuses. Thereafter, the wireless power transmission apparatus may allocate an insufficient amount of power to the second target wireless power transmission apparatus. Here, the insufficient power amount may be calculated by subtracting the available amount of power of the first target wireless power transmission apparatus from the required power amount.

When the target wireless power transmission apparatus is determined, the serving wireless power transmission apparatus may transmit a predetermined handover request message including the characteristics and state information about the corresponding wireless power reception apparatus to the target wireless power transmission apparatus (S1307).

Upon receiving a handover complete message from the target wireless power transmission apparatus, the serving wireless power transmission apparatus may stop wireless power transmission to the wireless power reception apparatus (S1309).

Subsequently, the serving wireless power transmission apparatus may determine whether it can be included in the candidate wireless power transmission apparatuses based on the reception sensitivity of the Bluetooth signal (S1311).

If it is determined that the serving wireless power transmission apparatus is included in the candidate wireless power transmission apparatuses, the serving wireless power transmission apparatus may monitor the uplink Bluetooth signal (S1313). At this time, the serving wireless power transmission apparatus may be added to the list of candidate wireless power transmission apparatuses corresponding to the wireless power reception apparatus, and the target wireless power transmission apparatus may become a new serving wireless power transmission apparatus.

If the serving wireless power transmission apparatus is not included in the candidate wireless power transmission apparatuses as a result of the determination in step 1311, it may output a beacon signal using the resonance frequency band after sleeping for a predetermined time (S1315).

While it is illustrated in FIG. 13 that the target wireless power transmission apparatus is determined when the power transmission efficiency falls below a reference value during charging, this is merely one embodiment. In another embodiment of the present disclosure, it should be noted that the target wireless power transmission apparatus may be determined when the reception sensitivity of the Bluetooth signal received from the wireless power reception apparatus falls below a reference value.

The method according to an embodiment of the present disclosure may be implemented as a program to be executed on a computer and stored in a computer-readable recording medium. Examples of the computer-readable recording medium include ROM, RAM, CD-ROM, magnetic tapes, floppy disks, and optical data storage devices, and also include carrier-wave type implementation (e.g., transmission over the Internet).

The computer-readable recording medium may be distributed to a computer system connected over a network, and computer-readable code may be stored and executed thereon in a distributed manner. Functional programs, code, and code segments for implementing the method described above may be easily inferred by programmers in the art to which the embodiments pertain.

It will be apparent to those skilled in the art that the present disclosure may be embodied in specific forms other than those set forth herein without departing from the spirit and essential characteristics of the present disclosure.

Therefore, the above embodiments should be construed in all aspects as illustrative and not restrictive. The scope of the disclosure should be determined by the appended claims and their legal equivalents, and all changes coming within the meaning and equivalency range of the appended claims are intended to be embraced therein.

[Industrial Applicability]

The present disclosure relates to a wireless charging technique, and may be applied to a network-based wireless power control method and an apparatus and system therefor.

## Claims

1.  A method for controlling wireless power by a serving wireless power transmission apparatus, the method comprising:

    activating a Bluetooth function when power is applied;
    transmitting a beacon signal using a resonance frequency band;
    measuring, when an uplink Bluetooth signal generated by a wireless power reception apparatus is sensed, a first reception sensitivity to the Bluetooth signal;
    receiving second to n-th reception sensitivities corresponding to the Bluetooth signal from at least one other wireless power transmission apparatus connected to a network; and
    determining whether transmission of the wireless power is possible based on the first to n-th reception sensitivities.

2.  The method according to claim 1, wherein, when it is determined that transmission of the wireless power is possible, the wireless power is transmitted through the resonance frequency band.

3.  The method according to claim 2, further comprising:

    determining at least one target wireless power transmission apparatus when the first reception sensitivity falls below a reference value during transmission of the wireless power; and
    transmitting a handover request message including characteristics and state information about the wireless power reception apparatus to the target wireless power transmission apparatus over the network.

4.  The method according to claim 2, further comprising:

    determining at least one target wireless power transmission apparatus when efficiency of power transmission to the wireless power reception apparatus falls below a reference value during transmission of the wireless power; and
transmitting a handover request message including characteristics and state information about the wireless power reception apparatus to the target wireless power transmission apparatus over the network.

5.  The method according to claim 3 or 4, wherein the characteristic and state information about the wireless power reception apparatus comprises at least one of reception sensitivity information about the Bluetooth signal, identification information about the wireless power reception apparatus, information about the amount of power required by the wireless power reception apparatus, information about a charging state of the wireless power reception apparatus, information about a version of software installed on the wireless power reception apparatus, authentication and security information about the wireless power reception apparatus, neighboring and/or candidate wireless power transmission apparatus list information corresponding to the wireless power reception apparatus, sub-in-band channel allocation information allocated to the wireless power reception apparatus, and Bluetooth communication connection information corresponding to the wireless power reception apparatus.

6.  The method according to claim 3 or 4, wherein, when the handover request message is received by the target wireless power transmission apparatus, the target wireless power transmission apparatus initiates transmission of the wireless power to the wireless power reception apparatus without sending out the beacon signal.

7.  The method according to claim 3 or 4, further comprising:

    generating a candidate wireless power transmission apparatus list based on the first to n-th reception sensitivities,
    wherein the target wireless power transmission apparatus is determined from the candidate wireless power transmission apparatus list.

8.  The method according to claim 7, wherein, when a plurality of target wireless power transmission apparatuses is determined from the candidate wireless power transmission apparatus list, the determined plurality of target wireless power transmission apparatuses is controlled to supply the wireless power to the wireless power reception apparatus simultaneously.

9.  The method according to claim 3 or 4, further comprising:

when the handover complete message is received from the target wireless power transmission apparatus, stopping transmission of the wireless power and determining whether the serving wireless power transmission apparatus is a candidate wireless power transmission apparatus, based on the first to n-th reception sensitivities.

10. The method according to claim 9, wherein, when it is determined that the serving wireless power transmission apparatus is the candidate wireless power transmission apparatus, the uplink Bluetooth signal is monitored.

11. The method according to claim 9, when it is determined that the serving wireless power transmission apparatus is not the candidate wireless power transmission apparatus, the beacon signal is transmitted with a predetermined periodicity.

12. The method according to claim 3 or 4, further comprising:

receiving transmitter state information from the at least one wireless power transmission apparatus connected to the network, wherein the amount of power to be transmitted to the wireless power reception apparatus for each of the at least one determined target wireless power transmission apparatus is determined based on the transmitter state information.

13. The method according to claim 12, wherein the transmitter state information comprises at least one of information about a maximum transmission power intensity, information about the number of currently connected wireless power reception apparatuses, information about the maximum number of serviceable wireless power reception apparatuses, information about the amount of available transmission power, and sub-in-band allocation information allocated for each of the connected wireless power reception apparatuses.

14. A computer-readable recording medium on which a program for executing the method according to any one of claims 1 to 13 is recorded.

15. A system for controlling wireless power comprising:

first to n-th wireless power transmission apparatuses configured to activate a Bluetooth function when power is applied, transmit a beacon signal through a resonance frequency band, measure a reception sensitivity of an uplink Bluetooth signal and exchange information about the measured reception sensitivity over a network; and
a wireless power reception apparatus configured to broadcast an advertisement signal when the beacon signal is sensed,
wherein the first to n-th wireless power transmission apparatuses determine whether to transmit wireless power to the wireless power reception apparatus based on information about the exchanged reception sensitivity.

16. The system according to claim 15, wherein the beacon signal and the Bluetooth signal are transmitted and received through different frequency bands.

17. The system according to claim 15, wherein the network is a wired or wireless IP communication network.

18. The system according to claim 15, wherein a serving wireless power transmission apparatus among the first to n-th wireless power transmission apparatuses identifies at least one candidate wireless power transmission apparatus based on the exchanged reception sensitivity, determines, when it is recognized that the reception sensitivity of the Bluetooth signal in the serving wireless power transmission apparatus is less than or equal to a reference value, a target wireless power transmission apparatus of the at least one candidate wireless power transmission apparatus and then transmits a predetermined handover request message to the determined target wireless power transmission apparatus.

19. The system according to claim 15, wherein the serving wireless power transmission apparatus among the first to the n-th wireless power transmission apparatuses generates a candidate wireless power transmission apparatus list based on the exchanged reception sensitivity, determines, when it is recognized that efficiency of power transmission to the wireless power reception apparatus is less than or equal to a reference value, a target wireless power transmission apparatus in the candidate wireless power transmission apparatus list and then transmits a predetermined handover request message to the determined target wireless power transmission apparatus.

20. The system according to claim 18 or 19,
wherein, when the serving wireless power transmission apparatus receives a handover complete message from the target wireless power transmission apparatus, transmission of the wireless power is stopped and it is determined whether the serving power transmission apparatus is a candidate power transmission apparatus, based on the first to n-th reception sensitivities.

21. The system according to claim 20, wherein, when it is determined that the serving wireless power transmission apparatus is the candidate wireless power transmission apparatus, the uplink Bluetooth signal is monitored.

22. The system according to claim 20, wherein, when it is determined that the serving wireless power transmission apparatus is not the candidate wireless power transmission apparatus, the beacon signal is transmitted with a predetermined periodicity.

23. The system according to claim 15, wherein the first to n-th wireless power transmission apparatuses exchange transmitter state information over the network,
wherein the transmitter state information comprises at least one of information about a maximum transmission power intensity, information about the number of currently connected wireless power reception apparatuses, information about the maximum number of serviceable wireless power reception apparatuses, information about the amount of available transmission power, and sub-in-band allocation information allocated for each of the connected wireless power reception apparatuses.

24. A power transmission apparatus comprising:

a power transmission module configured to transmit a beacon signal and wireless power using a resonance frequency band;
a first communication module configured to sense a Bluetooth signal broadcast by a wireless power reception apparatus;
a reception sensitivity measurement module configured to measure a reception sensitivity of the sensed Bluetooth signal; and
a second communication module configured to exchange information about the measured reception sensitivity with a network-connected wireless power transmission apparatus,
wherein whether or not to transmit wireless power to the wireless power reception apparatus is determined based on information about the exchanged reception sensitivity.

25. The wireless power transmission apparatus according to claim 24, wherein characteristics and state information about the wireless power reception apparatus is received through the first communication module and is exchanged with the network-connected wireless power transmission apparatus through the second communication module.

26. The wireless power transmission apparatus according to claim 24, wherein transmitter state information is exchanged with the network-connected wireless power transmission apparatus through the second communication module.

27. The wireless power transmission apparatus according to claim 24, wherein, when the measured reception sensitivity falls below a reference value, a target wireless power transmission apparatus is determined from a list of candidate wireless power transmission apparatuses generated based on information about the exchanged reception sensitivity.

28. The wireless power transmission apparatus according to claim 27, wherein, when a handover complete message is received from the target wireless power transmission apparatus, transmission of the wireless power to the wireless power reception apparatus is stopped, and it is determined whether the wireless power transmission apparatus is a candidate wireless power transmission apparatus, based on the information about the exchanged reception sensitivity.

29. The wireless power transmission apparatus according to claim 28, wherein, when it is determined that the wireless power transmission apparatus is the candidate wireless power transmission apparatus as a result of the determination, the Bluetooth signal is monitored.

30. The wireless power transmission apparatus according to claim 28, wherein, when it is determined that the wireless power transmission apparatus is not the candidate wireless power transmission apparatus as a result of the determination, the beacon signal is transmitted with a predetermined periodicity.

EP 3 288 152 A1

FIG. 1

INTERNET
NETWORK
50

POWER
MANAGEMENT
SERVER
60

EXTERNAL ACCESS
GATEWAY
40

BACKBONE NETWORK
30

FIRST WIRELESS
POWER TRANSMITTER

SECOND WIRELESS
POWER TRANSMITTER

N-TH WIRELESS POWER
TRANSMITTER

10

70

20

80

FIRST WIRELESS
POWER RECEIVER

SECOND WIRELESS
POWER RECEIVER

K-TH WIRELESS POWER
RECEIVER

FIG. 2

FIRST WIRELESS
POWER
TRANSMITTER

FIFTH WIRELESS
POWER
TRANSMITTER

SECOND
WIRELESS POWER
TRANSMITTER

211

WIRELESS
POWER
RECEIVER

220

SIXTH WIRELESS
POWER
TRANSMITTER

210

FIFTH WIRELESS
POWER
TRANSMITTER

SEVENTH
WIRELESS POWER
TRANSMITTER

FOURTH
WIRELESS POWER
TRANSMITTER

EIGTH WIRELESS
POWER
TRANSMITTER

20

FIG. 3

| FIRST WIRELESS POWER TRANSMITTER | | FIFTH WIRELESS POWER TRANSMITTER |
|---|---|---|
| SECOND WIRELESS POWER TRANSMITTER | WIRELESS POWER RECEIVER | SIXTH WIRELESS POWER TRANSMITTER |
| FIFTH WIRELESS POWER TRANSMITTER | | SEVENTH WIRELESS POWER TRANSMITTER |
| FOURTH WIRELESS POWER TRANSMITTER | | EIGTH WIRELESS POWER TRANSMITTER |

210    301    220

FIG. 4

| FIRST WIRELESS POWER TRANSMITTER | | FIFTH WIRELESS POWER TRANSMITTER |
|---|---|---|
| SECOND WIRELESS POWER TRANSMITTER | WIRELESS POWER RECEIVER | SIXTH WIRELESS POWER TRANSMITTER |
| FIFTH WIRELESS POWER TRANSMITTER | | SEVENTH WIRELESS POWER TRANSMITTER |
| FOURTH WIRELESS POWER TRANSMITTER | | EIGTH WIRELESS POWER TRANSMITTER |

210    401    220

FIG. 5

| FIRST WIRELESS POWER TRANSMITTER | | FIFTH WIRELESS POWER TRANSMITTER |
|---|---|---|
| SECOND WIRELESS POWER TRANSMITTER | WIRELESS POWER RECEIVER | SIXTH WIRELESS POWER TRANSMITTER |
| FIFTH WIRELESS POWER TRANSMITTER | WIRELESS POWER RECEIVER | SEVENTH WIRELESS POWER TRANSMITTER |
| FOURTH WIRELESS POWER TRANSMITTER | | EIGTH WIRELESS POWER TRANSMITTER |

210    220    220    301    510    501

FIG. 6

610
**FIRST WIRELESS POWER TRANSMITTER**

620
**WIRELESS POWER RECEIVER**

630
**SECOND WIRELESS POWER TRANSMITTER**

S601
First transmitter beacon signal

S602
Second transmitter beacon signal

Sense the first and second wireless power transmitters
S603

Broadcast advertisement signal
S607

Measure reception sensitivity of the advertisement signal — S605

S604
Measure reception sensitivity of the advertisement signal

S606
Transmit first reception sensitivity
S608

Transmit second reception sensitivity

First reception sensitivity> Second reception sensitivity — S609

Second reception sensitivity> First reception sensitivity — S611

Yes

S610
Transmit wireless power

S612
Transmit wireless power

Yes

FIG. 7

710
**SERVING WIRELESS POWER TRANSMITTER**

720
**WIRELESS POWER RECEIVER**

730
**TARGET WIRELESS POWER TRANSMITTER**

Transmitter and control wireless power
S701

Reception sensitivity is less than or equal to reference value?
S703

No

Yes

Determine target wireless power transmitter in candidate wireless power transmitter list

S705

Transmit a handover request message including characteristics and state information about the wireless power receiver

S707

Configured out-of-band communication channel
S709

Transmit and control wireless power

S711

22

FIG. 8

FIG. 9

FIG. 10

**WIRELESS POWER TRANSMISSION CONTROLLER** 1010

**FIRST TO N-TH WIRELESS POWER TRANSMITTERS** 1020

S1001 Transmit wireless power transmitter state information

S1003 Store state information

S1005 Transmit reception sensitivity information about wireless power receiver

S1007 Identify wireless power transmitters having reception sensitivity greater than or equal to first reference value for each wireless power receiver

S1009 Allocate identified wireless power transmitters to the candidate wireless power transmitter list of the corresponding wireless power receiver

S1011 Extract wireless power transmitter having reception sensitivity greater than or equal to second reference value from the candidate wireless power transmitter list

S1013 Calculate power to be transmitted to the wireless power reception apparatus for each wireless power transmitter based on state information and reception sensitivity of the extracted wireless power transmitter

S1015 Transmit power transmission request message including calculated power information to the extracted wireless power transmitter

FIG. 11

1100

1110 POWER TRANSMISSION MODULE

1120 FIRST COMMUNICATION MODULE THE LINE

1130 SECOND COMMUNICATION MODULE

1140 RECEPTION SENSITIVITY MEASUREMENT MODULE

1150 MEMORY

1160 CONTROLLER

FIG. 12

```
                    ┌──────────────┐
                    │    Start     │
                    └──────┬───────┘
                           │
           ┌───────────────────────────────────────┐
S1201      │      Activate Bluetooth function      │            ┌─────────────────────┐
           └───────────────────┬───────────────────┘            │      Sleep for      │
                               │◄────────────────────────────── │ predetermined time  │
           ┌───────────────────────────────────────┐            └─────────────────────┘
S1203      │ Output beacon signal using resonance frequency band │    S1221
           └───────────────────┬───────────────────┘            │◄──────
                               │
           ┌───────────────────────────────────────┐
S1205      │       Monitor uplink Bluetooth signal  │
           └───────────────────┬───────────────────┘
                               │
           ┌───────────────────────────────────────┐
           │ Measure reception sensitivity when the uplink Bluetooth │
S1207      │   signal (advertisement signal) is sensed  │
           └───────────────────┬───────────────────┘
                               │
           ┌───────────────────────────────────────┐
           │ Receive reception sensitivity information measured by │
S1209      │   another network-connected transmitter  │
           └───────────────────┬───────────────────┘
                               │
           ┌───────────────────────────────────────┐
           │ Determine serving and candidate wireless power │
           │ transmission apparatuses corresponding to the receiver │
S1211      │ based on internally measured reception sensitivity and │
           │ externally received reception sensitivity │
           └───────────────────┬───────────────────┘
```

- Activate Bluetooth function — S1201
- Output beacon signal using resonance frequency band — S1203
- Monitor uplink Bluetooth signal — S1205
- Measure reception sensitivity when the uplink Bluetooth signal (advertisement signal) is sensed — S1207
- Receive reception sensitivity information measured by another network-connected transmitter — S1209
- Determine serving and candidate wireless power transmission apparatuses corresponding to the receiver based on internally measured reception sensitivity and externally received reception sensitivity — S1211

S1213 — Is the wireless power transmission apparatus is a serving wireless power transmission apparatus?

No → S1219 — Is the wireless power transmission apparatus is a candidate wireless power transmission apparatus?

Sleep for predetermined time — S1221

S1215 — Exchanges state information after being connected with the receiver for Bluetooth communication

S1217 — Perform charging of the receiver

(A)

FIG. 13

**S1301** — Perform charging of the receiver

**S1303** — Is power transmission efficiency less than or equal to predetermined reference value

**S1305** — Determine the target wireless power transmission apparatus from the list of candidate wireless power transmission apparatuses

**S1307** — Transmit predetermined handover request message including characteristics and state information about the corresponding receiver to the determined target wireless power transmission apparatus

**S1309** — Stop power transmission when handover complete message is received from the target wireless power transmission apparatus

**S1311** — Candidate wireless power transmission apparatus?

No

Yes

**S1313** — Monitor uplink Bluetooth signal

**S1315** — Output beacon signal using resonance frequency band

Finish

## INTERNATIONAL SEARCH REPORT

International application No.

**PCT/KR2016/004094**

| A. CLASSIFICATION OF SUBJECT MATTER |
|---|
| *H02J 17/00(2006.01)i, H02J 7/02(2006.01)i* |
| According to International Patent Classification (IPC) or to both national classification and IPC |

| B. FIELDS SEARCHED |
|---|
| Minimum documentation searched (classification system followed by classification symbols) |
| H02J 17/00; H04Q 7/24; H04B 7/00; H02J 7/00; H02J 7/02 |
| Documentation searched other than minimum documentation to the extent that such documents are included in the fields searched<br>Korean Utility models and applications for Utility models: IPC as above<br>Japanese Utility models and applications for Utility models: IPC as above |
| Electronic data base consulted during the international search (name of data base and, where practicable, search terms used)<br>eKOMPASS (KIPO internal) & Keywords: wireless power, bluetooth, beacon signal, broadcasting, receive sensitivity, network connection, message |

| C. DOCUMENTS CONSIDERED TO BE RELEVANT | | |
|---|---|---|
| Category* | Citation of document, with indication, where appropriate, of the relevant passages | Relevant to claim No. |
| A | KR 10-2013-0006326 A (SAMSUNG ELECTRONICS CO., LTD.) 16 January 2013<br>See paragraphs [18]-[199], claims 1-27, figures 1-16. | 1-30 |
| A | KR 10-2014-0124709 A (INTELLECTUAL DISCOVERY CO., LTD.) 27 October 2014<br>See paragraphs [88]-[156], claims 1-16, figures 5-12. | 1-30 |
| A | WO 2010-085701 A2 (QUALCOMM INCORPORATED et al.) 29 July 2010<br>See paragraphs [89]-[116], figures 11-14G. | 1-30 |
| A | US 2010-0008338 A1 (TSFATI, Yossi et al.) 14 January 2010<br>See paragraphs [69]-[135], figures 2-16. | 1-30 |
| A | WO 2012-027166 A1 (OMNILECTRIC, INC. et al.) 01 March 2012<br>See paragraphs [68]-[95], figures 8-12. | 1-30 |

| ☐ Further documents are listed in the continuation of Box C. | ☒ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 19 JULY 2016 (19.07.2016) | **20 JULY 2016 (20.07.2016)** |

| Name and mailing address of the ISA/KR | Authorized officer |
|---|---|
| Korean Intellectual Property Office<br>Government Complex-Daejeon, 189 Seonsa-ro, Daejeon 302-701,<br>Republic of Korea | |
| Facsimile No. 82-42-472-7140 | Telephone No. |

Form PCT/ISA/210 (second sheet) (January 2015)

**INTERNATIONAL SEARCH REPORT**
Information on patent family members

International application No.

**PCT/KR2016/004094**

| Patent document cited in search report | Publication date | Patent family member | Publication date |
|---|---|---|---|
| KR 10-2013-0006326 A | 16/01/2013 | CN 103782486 A | 07/05/2014 |
| | | EP 2731231 A2 | 14/05/2014 |
| | | JP 2014-521290 A | 25/08/2014 |
| | | KR 10-2013-0006363 A | 16/01/2013 |
| | | US 2014-0346888 A1 | 27/11/2014 |
| | | WO 2013-006004 A2 | 10/01/2013 |
| | | WO 2013-006004 A3 | 14/03/2013 |
| KR 10-2014-0124709 A | 27/10/2014 | CN 105144544 A | 09/12/2015 |
| | | CN 105144545 A | 09/12/2015 |
| | | KR 10-2014-0124706 A | 27/10/2014 |
| | | KR 10-2014-0124707 A | 27/10/2014 |
| | | KR 10-2014-0124708 A | 27/10/2014 |
| | | US 2016-0065005 A1 | 03/03/2016 |
| | | US 2016-0087686 A1 | 24/03/2016 |
| | | WO 2014-171773 A1 | 23/10/2014 |
| | | WO 2014-171774 A1 | 23/10/2014 |
| WO 2010-085701 A2 | 29/07/2010 | CN 102292896 A | 21/12/2011 |
| | | CN 102292896 B | 21/01/2015 |
| | | CN 104485722 A | 01/04/2015 |
| | | EP 2389718 A2 | 30/11/2011 |
| | | JP 2012-516131 A | 12/07/2012 |
| | | JP 2015-008628 A | 15/01/2015 |
| | | JP 5921625 B2 | 24/05/2016 |
| | | KR 10-1578966 B1 | 18/12/2015 |
| | | KR 10-1614260 B1 | 20/04/2016 |
| | | KR 10-2011-0106456 A | 28/09/2011 |
| | | KR 10-2015-0013363 A | 04/02/2015 |
| | | KR 10-2015-0020710 A | 26/02/2015 |
| | | TW 201042876 A | 01/12/2010 |
| | | US 2010-0181961 A1 | 22/07/2010 |
| | | US 2013-0278209 A1 | 24/10/2013 |
| | | US 2014-0361741 A1 | 11/12/2014 |
| | | US 8497658 B2 | 30/07/2013 |
| | | US 8823319 B2 | 02/09/2014 |
| | | WO 2010-085701 A3 | 26/05/2011 |
| US 2010-0008338 A1 | 14/01/2010 | NONE | |
| WO 2012-027166 A1 | 01/03/2012 | CN 101711450 A | 19/05/2010 |
| | | CN 103155353 A | 12/06/2013 |
| | | EP 2160814 A2 | 10/03/2010 |
| | | EP 2609670 A1 | 03/07/2013 |
| | | JP 2010-530210 A | 02/09/2010 |
| | | JP 2013-538548 A | 10/10/2013 |
| | | JP 2014-223018 A | 27/11/2014 |
| | | JP 5366058 B2 | 11/12/2013 |
| | | JP 5738416 B2 | 24/06/2015 |

Form PCT/ISA/210 (patent family annex) (January 2015)

INTERNATIONAL SEARCH REPORT
Information on patent family members

International application No.

**PCT/KR2016/004094**

| Patent document cited in search report | Publication date | Patent family member | Publication date |
|---|---|---|---|
| | | KR 10-1145969 B1 | 15/05/2012 |
| | | KR 10-2012-0037965 A | 20/04/2012 |
| | | KR 10-2014-0012937 A | 04/02/2014 |
| | | RU 2013112936 A | 27/09/2014 |
| | | TW 201212462 A | 16/03/2012 |
| | | TW 201528644 A | 16/07/2015 |
| | | TW 201601411 A | 01/01/2016 |
| | | TW I478461 B | 21/03/2015 |
| | | TW I499156 B | 01/09/2015 |
| | | US 2008-0309452 A1 | 18/12/2008 |
| | | US 2010-0315045 A1 | 16/12/2010 |
| | | US 2012-0193999 A1 | 02/08/2012 |
| | | US 2013-0207604 A1 | 15/08/2013 |
| | | US 2014-0035524 A1 | 06/02/2014 |
| | | US 2015-0022022 A1 | 22/01/2015 |
| | | US 2016-0013685 A1 | 14/01/2016 |
| | | US 8159364 B2 | 17/04/2012 |
| | | US 8410953 B2 | 02/04/2013 |
| | | US 8446248 B2 | 21/05/2013 |
| | | US 8558661 B2 | 15/10/2013 |
| | | US 8854176 B2 | 07/10/2014 |
| | | US 9142973 B2 | 22/09/2015 |
| | | WO 2008-156571 A2 | 24/12/2008 |
| | | WO 2008-156571 A3 | 19/02/2009 |

Form PCT/ISA/210 (patent family annex) (January 2015)